# EUROPEAN PATENT APPLICATION

(11) **EP 0 524 917 A1**
(43) Date of publication of application: **27.01.1993**
(21) Application number: 92830379.1
(22) Date of filing: 14.07.1992
(51) Int. Cl.: D21C 5/02, C02F 9/00

(54) **A process and system for clarifying wash-up waters**

(30) Priority: 15.07.1991 IT MI911965
(71) Applicant: COMER S.p.A., S. Vito Di Leguzzano (Vicenza) (IT)
(72) Inventor: Codoni, Augusto, Pomarolo TRENTO (IT)
(74) Representative: Mercurio, Franco

(57) **Abstract**

A process for clarifying wash-up waters, in particular flexographic waters carrying water-soluble inks, suitable for recovering the clarified water, including the following steps:
wash-up waters are sent to a reaction tank (1); within said tank there is added a de-inking compound acting on water-soluble flexographic printing agents; the mass comprising water and de-inking agent is mixed; low pressure air is blown into said mass; the same is allowed to rest;the clarified water is taken out through valves (17) provided in the intermediate portion of tank (1); thereafter, the ink-carrying slurries are drained out of tank bottom (19).

This invention concerns also the system for carrying out the subject process.

## Description

This invention concerns the process and system for clarifying wash-up waters, in particular flexographic waters carrying water-soluble inks, said process and system being suitable for recovering clarified water.

It should be noted that flexographic water clarification systems are already operating, although their performance is not satisfactory, in that the amounts of de-inking agents used and of the air which is blown in are not metered in such a way as to obtain adequately clarified waters not deteriorated as far as their physical and chemical properties are concerned. In particular the salt content and the pH of the waters clarified through the systems known in the art are changed in such a manner that the clarified water not always is re-usable without incurring in problems along the technological cycle.

Moreover, said systems require additional treatments in order to reach a satisfactory clarification of the ink-carrying waters, whereby said systems are very expensive to build, to maintain and to operate.

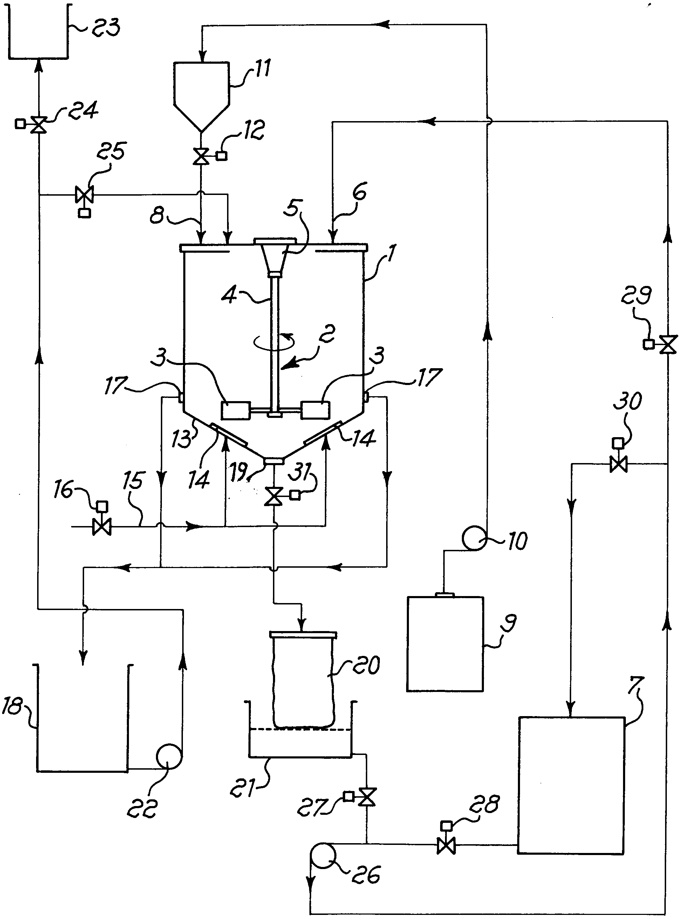

The process and system according to this invention overcome the drawbacks mentioned above, in that they have features and advantages that will be clearly pointed out in the following description of a non limiting embodiment thereof, made in reference to the attached drawing, which is a schematic of the system according to this invention. Referring now to the attached drawing, the system according to the process mentioned herein above includes a reaction tank 1 containing a high flow, low turbulence rotating stirrer 2 provided with blades 3 mounted on a rotating shaft 4 supported by a bearing 5. Said stirrer is rotatingly driven by an electric motor, not shown in the drawing.

In the top portion of the reaction tank there is shown inlet 6 for black liquor to be clarified and coming from sewer water storage 7, and inlet 8 of a de-inking compound acting on flexographic water-soluble printing agents, like for instance the chemical compound available on the market and known as "DERCON" of DER S.r.l. Said de-inking compound is supplied, out of container 9 and by means of a pump 10, to metering device 11 connected through a valve 12 to reaction tank 1 inlet 8. In the conical lower end portion 13 of reaction tank 1 air inlet openings 14 are provided, which may be comprised of foraminous plates or a controlled porosity porous material. Air comes from a line 15, through a valve 16. On top of said plates 14, in the cylindrical end portion of said tank 1 there is provided drains 17, ranging in number from two to six, for clarified water which flows to intermediate collecting tank 18. On the conical bottom of tank 1 there is located slurry outlet 19 connected to fabric bags 20 adapted to retain solids from the slurry while allowing clarified water and percolation to drip and to collect into special tank 21. Pump 22 transfers the clarified water collected in tank 18 from the latter to clarified water storage tank 23 and thence to usage.

By means of a valve arrangement 24 and 25, wherein the second valve is opened when the first is closed, the clarified water flows for a short time to the reaction tank for washing the same.

When starting the cycle, pump 26 transfers the waters to be clarified from storage tank 7 to reaction tank 1.

The water which has dripped out of bags 20 and has been collected in tank 21, flows through valve 27 and, being propelled by pump 26, it flows into storage tank 7, after valves 28 and 29 have been closed, and valve 30 has been opened.

Eventually, valve 31 closes drain 19 of reaction tank 1, and there starts a new treatment cycle.

According to the process of this invention, said cycle includes the steps described above and reported with more details in the following, i.e.:
wash-up waters are conveyed from sewage water storage tank from storage tank 7 to reaction tank 1, through open valve 29;
once a certain level of said waters has been reached in reaction tank 1, there is added in said tank a de-inking compound for water-soluble flexographic printing agents, coming from collecting tank 9 under the action of a pump 10 and through metering device 11, in an amount ranging from 0.1% to 0,8% of the volume of the water to be treated;
the mass comprised of water and de-inking agent is mixed for a time ranging from 0,2 to 20 seconds;
after said mass has been homogeneized, air at a low pressure ranging from 0,2 to 0,5 bar is blown into said mass through plates 14;
after the air blowing in operation has been completed, said mass is left to rest inside tank 1 for a time ranging from 10′ to 60′, in order to obtain a dense layer of the ink fraction at the surface of the mass, and the mass of clarified water below, underneath that layer; the clarified water exits through valves in the intermediate cylindrical tank portion 17; and
the ink carrying solids from the slurry are discharged through tank bottom drain 19.

It may be stated that, by means of the inventive process and system, the following advantages result:
besides the inks, as described above, also the oils, always present in wash-up waters, are eliminated;
the initial salt content of the water is not changed at all;
only a very slight variation of the treated water pH may be detected;
metals like lead, iron, copper and chrome are taken down in a percentage as high as 80%;
the final clarified water may be re-used problem-free in the technological cycle.

It is understood that variations and modifications may be made to the system of this invention without exceeding the scope of protection of the invention, as claimed herein below.

## Claims

1. A process for clarifying wash-up waters, in particular flexographic waters carrying water-soluble inks, suitable for recovering the clarified water, characterized by comprising the following steps:
said wash-up waters are conveyed from sewage water storage tank (7) to a reaction tank (1);
once a certain level of said waters has been reached in reaction tank (1), there is added in said tank a de-inking compound for water-soluble flexographic printing agents;
the mass comprising water and de-inking agent is mixed; once said mass has been homogenized, low pressure air is blown into said mass;
after finishing the blowing-in operation, said mass is allowed to rest so that at the top of said mass there concentrates a dense layer of the ink fraction, while at the bottom, underneath said layer, there collects the clarified water mass;
the clarified water is taken out through valves (17) in the cylindrical intermediate portion of tank (1); and the ink-carrying slurries are drained through tank bottom (19).

2. The process according to claim 1, characterized in that the amount of de-inking compound ranges from 0,1% to 0,8% of the volume of water to be treated; the time for mixing water with de-inking agent ranges from 0,2 to 20 seconds; the air blowing in operation is performed at a pressure ranging from 0,2 to 0,5 bar, during a time interval of 3-30 seconds, with an amount of micronized air ranging from 0,05 to 0,04 Nmc/l/minute; the resting time after the blowing-in operation ranges from 10 to 60 minutes.

3. The process according to the preceding claim, characterized in that the slurries flow through bags (20) adapted to retain the ink while the water clarified or percolated coming out of said bags is sent to sewage water tank (7).

4. A system for carrying out the process according to the preceding claims, characterized by including: a reaction tank (1) provided with a rotating stirrer (2) and having a conically shaped lower end portion (13); an inlet (6), in said reaction tank, for wash-up waters coming from sewage water storage tank (7); an inlet (8) for the de-inking compound acting on the water-soluble flexographic printing agents; air inlets (14) in the conical peripheral end portion (13) of said reaction tank; clarified water drains (17) in the cylindrical end portion of said tank (1), above said inlets (14) and a slurry drain (19) at the bottom of said reaction tank.

5. The system of claim 4, characterized in that said air inlet ports (14) comprise either foraminous plates or a porous material.

6. The system according to each one of claims 4 and 5, characterized in that the clarified water coming out of reaction tank (1) is introduced into an intermediate collecting tank (18) and a pump 22 is provided for sending the clarified water to the points of use and a valve arrangement (24, 25) which, for a short time, shuts off the intake for said use, and diverts clarified water to reaction tank (1) for washing the same.

7. The system according to each one of claims 4 to 6, characterized in that there is provided a pump (26) for conveying the wash-up water from sewage water storage tank (7) to reaction tank (1) and a valve system (29, 30) adapted to shut off said inlet to reaction tank (1) and which diverts the clarified water coming out of said bags (20) to said sewage water storage tank (7).
